# EUROPÄISCHE PATENTANMELDUNG

(11) **EP 1 788 025 A1**
(43) Veröffentlichungstag der Anmeldung: **23.05.2007**
(21) Anmeldenummer: 06122440.8
(22) Anmeldetag: 17.10.2006
(51) Int. Cl.: C08L 77/00, C08L 77/06, F21V 7/22

(54) **Metallisch beschichtete Lichtreflektierbauteile auf der Basis von thermoplastischen Formmassen**

(30) Priorität: 22.09.2006 DE 102006045269; 09.11.2005 DE 102005053776
(71) Anmelder: EMS-Chemie AG, 7013 Domat/Ems (CH)
(72) Erfinder: Hala, Ralf, 88161, Lindenberg (DE); Kaisser, Michael, 7203, Trimmis (CH); Bühler, Friedrich Dr., 7430, Thusis (CH)
(74) Vertreter: OK pat AG

(57) **Zusammenfassung**

Betrifft die Verwendung einer thermoplastischen Polymer-Formmasse zum Herstellen von für Betriebstemperaturen von mindestens 200 °C geeigneten, metallisch beschichteten Lichtreflektierbauteilen auf der Basis von Thermoplasten. Die erfindungsgemäss verwendete Polymer-Formmasse ist dadurch gekennzeichnet, dass sie Polyamide umfasst, die ausgewählt sind aus einer Gruppe, welche aus Homopolyamiden, Copolyamiden sowie Mischungen (Blends) aus Homopolyamiden und Copolyamiden und Mischungen aus Homopolyamiden oder Copolyamiden besteht, wobei diese Polyamide ausgewählt sind aus einer Gruppe, die amorphe und transparente Polyamide umfasst, und wobei diese Polyamide eine Glasübergangstemperatur (Tg) von mindestens 205 °C aufweisen. Entsprechend der erfindungsgemässen Verwendung hergestellte Lichtreflektierbauteile sind für Betriebstemperaturen von mindestens 200 °C geeignet und umfassen Reflektoren für Fahrbeleuchtungen von Fahrzeugen, für Signal- und Beleuchtungseinrichtungen und Reflektoren für Sonnenlichtkollektoren.

## Beschreibung

Die Erfindung betrifft die Verwendung einer thermoplastischen Polymer-Formmasse zum Herstellen von für Betriebstemperaturen von mindestens 200 °C geeigneten, metallisch beschichteten Lichtreflektierbauteilen, sowie entsprechende, metallisch beschichtete bzw. metallisch zu beschichtende Lichtreflektierbauteile.

Thermoplastische Kunststoffe, aus denen durch Spritzgiessen und anschliessende Metallisierung (Vakuumbeschichtung, zumeist mit Aluminium) lichtreflektierende Bauteile hergestellt werden, sind bekannt. Solche Bauteile sind z.B. Scheinwerferreflektoren für Automobile. Neben den früher ausnahmslos verwendeten Paraboloid-Scheinwerfern wurden zwei hinsichtlich Lichtausnutzung und Platzbedarf optimierte Grundtypen entwickelt, die Projektions- (Ellipsoid, Polyellipsoid) und die Freiflächen-Scheinwerfer. Da die Abdeckscheiben insbesondere von Freiflächen-Scheinwerfern in Folge der optimierten Lichtausnutzung und -verteilung dieses Reflektortyps meist ohne Profilierung gestaltet werden können, sind heute Klarsichtscheiben aus Polycarbonat oder Glas im Einsatz. Dies erhöht die Anforderungen an die Oberflächengüte der von aussen gut sichtbaren Elemente (z.B. Reflektor, Subreflektor, Blendrahmen), wobei die Dimensionsbeständigkeit in der Wärme, ein geringes Ausgasen, die mechanische Festigkeit, eine einfache Verarbeitung und geringe Fertigungstoleranzen weiterhin wichtig sind.

Solche Scheinwerferreflektoren können auch in den eigentlichen, im Wesentlichen eine Paraboloidform aufweisenden Reflektor und einen mehr oder weniger von der Paraboloidform abweichenden Subreflektor unterteilt werden. Der Reflektor ist das eigentliche, das Licht zur gewünschten Beleuchtung gezielt reflektierende Bauteil, das normalerweise in unmittelbarer Umgebung der das Licht erzeugenden Glühlampe angeordnet ist. Die Lampe bzw. Glühbirne oder eine diesen entsprechende Lichtquelle erzeugt neben dem Licht auch Wärme, so dass der Reflektor je nach Konstruktion einer Betriebstemperatur von etwa 180-220 °C ausgesetzt ist.

Subreflektor wird der weiter von der Lichtquelle entfernte Teil der lichtreflektierenden Bauteile genannt. Subreflektoren decken oft den Bereich zwischen dem Reflektor und dem Lampengehäuse bzw. der übrigen Karosserie oder auch der durchsichtigen Lampenabdeckung ab. Subreflektoren müssen deshalb keine Paraboloid-Fortsetzung sein welche der Erhöhung der Lichtausbeute dienen, sie können vielmehr eine ästhetische Aufgabe erfüllen, indem sie eine reflektierende Oberfläche darstellen, die den Reflektor gestalterisch vergrössert. Durch den grösseren Abstand von der Lichtquelle ist für Subreflektoren mit einer Betriebstemperatur von maximal etwa 170 °C zu rechnen.

Metallschichten, die zur Verbesserung der Reflexion auf die Oberflächen der Reflektoren und zum Erzeugen eines gestalterischen Eindrucks auf die Subreflektoren aufgebracht werden, sind keiner direkten mechanischen, jedoch einer thermischen Beanspruchung, wie z.B. Ausdehnung ausgesetzt. Dabei ist eine gute Haftfähigkeit der Metallschicht auf den Reflektor- und Subreflektorflächen wichtig, weil Blasenbildungen oder gar Abblättern die Lichtausbeute beeinträchtigen und den gestalterischen Eindruck verschlechtern würden.

Die Metallisierung der Reflektoren wird üblicherweise an Hand von sogenannten "Vapor-Deposit-Verfahren" ausgeführt. Im Vakuum wird dieses Beschichten mittels Bedampfen mit PVD-Methoden (PVD = physical vapor deposition, z.B. Aufdampfen oder Sputtern von z.B. Aluminium) und/oder mit CVD-Methoden (CVD = chemical vapor deposition, wie z.B. Plasma-unterstützte CVD) erreicht. Eine wichtige Anforderung an den Kunststoff ist deshalb eine geringe Ausgasrate unter den entsprechenden Vakuum- und Temperaturbedingungen. Damit die Metallschichten der Reflektoren im Betrieb nicht beschädigt werden, darf auch bei den genannten, hohen Betriebstemperaturen kein erhöhtes Ausgasen stattfinden. Zudem sollten die Reflektoren in einem Temperaturbereich von -50 °C bis 220 °C formstabil sein, d.h. das Ausdehnungs- und Schwindungsverhalten muss möglichst isotrop sein, damit - zumindest bei den Reflektoren - die Lichtausbeute bzw. Lichtbündelung nicht beeinträchtigt wird. Bevorzugt weisen die Metallschichten ein im Wesentlichen gleiches Ausdehnungs- und Schwindungsverhalten wie die Reflektoren auf, so dass die Zug- bzw. Schubbeanspruchung der Reflexionsschichten möglichst klein ist. Dadurch wird zusätzlich die Gefahr einer Rissbildung oder Stauchung in den Reflexionsschichten reduziert.

Eine weitere Anforderung betrifft die Oberflächengüte der zu beschichtenden (meist gekrümmten) Kunststoffoberfläche. Speziell bei Reflektoren, bei welchen die Lichtausbeute essentiell ist, muss eine möglichst homogene, glatte, hochglänzende Oberfläche für die Beschichtung bereitgestellt werden. Schlecht fliessende oder zu früh erstarrende Kunststoffe bzw. eine Zugabe von Füllstoffen führen in der Spritzgussform oft zu einem rauen, matten oder unregelmässigen Abdruck, gemessen an den extrem hohen Anforderungen einer spiegelglatten Oberfläche, selbst wenn die entsprechende Oberfläche des formgebenden Werkzeugs hochglanzpoliert ist.

Bisher wurden zum Herstellen von Reflektoren zumeist Duroplaste, seltener auch Thermoplaste eingesetzt. Von den letzteren weisen die hauptsächlich verwendeten, amorphen Thermoplaste, z.B. Polyetherimid (PEI), Polyamidimid (PAI) oder Polysulfone, z.B. Polyethersulfon (PES) bzw. Polysulfon (PSU) bzw. Polyphenylenethersulfon (PPSU), eine hohe bis sehr hohe Glasübergangstemperatur (Tg) auf (vgl. z.B. das PAI TORLON^{®} der Firma Solvay Advanced Polymers). Diese amorphen Hoch-Tg-Thermoplaste können ohne Füllstoffe zum Erzeugen von Reflektor-Rohlingen mit einer hervorragenden Oberflächenglätte verwendet werden. Die Reflektor-Rohlinge können direkt metallisiert werden. Nachteilig für eine Massenproduktion ist allerdings der zum Teil sehr hohe Preis der genannten amorphen Hoch-Tg-Thermoplaste. Zudem gestaltet sich die Verarbeitung dieser Hoch-Tg-Thermoplaste zum Teil als schwierig.

In der Beleuchtungseinheit treten naturgemäss die höchsten Temperaturen auf. Daher wurden bisher die Reflektoren entweder aus Blech, aus Duroplasten (BMC), oder aus metallisierten, spritzgegossenen amorphen Hoch-Tg-Thermoplasten (PC-HT, PEI, PSU, PES) hergestellt. Die hohen Toleranzanforderungen, gekoppelt mit der für die Metallisierung erforderlichen Oberflächengüte der Spritzgussteile wurden bisher hauptsächlich von ungefüllten amorphen Hoch-Tg-Thermoplasten oder lackierten Duroplasten erfüllt.

Ein Beispiel für einen der genannten Hoch-Tg-Thermoplaste ist das Polyethersulfon ULTRASON E^{®} von BASF Ludwigshafen, Deutschland (mit einer Irisiertemperatur von 212 °C), wie es in der nachfolgend zitierten Zeitschrift beschrieben ist. Im Zuge der fortschreitenden Komplexizitätsreduzierung findet zur Zeit eine zunehmende Integration von Scheinwerferkomponenten zu hoch entwickelten Beleuchtungssystemen statt, die höhere Materialanforderungen erwarten lassen [J. Queisser, M. Geprägs, R. Blum und G. Ickes, Trends bei Automobilscheinwerfern, *Kunststoffe* 3/2002, Hanser Verlag, München].

Sehr hohe Wärmeformbeständigkeit weist auch das teilkristalline Polyphenylensulfid (PPS) auf, das z.B. in EP 0 332 122 zur Herstellung von Scheinwerferreflektoren erwähnt ist. Dort ist ein Herstellungsverfahren offenbart, bei welchem in einem ersten Arbeitsschritt ein Reflektor-Rohling (unter Zusatz von maximal 25 % Russ zum Erzielen einer erhöhten elektrischen Leitfähigkeit) spritzgegossen wird. In einem zweiten Arbeitsschritt wird der Reflektor-Rohling, zum Ausgleichen von Unebenheiten und zur Erzielung einer glänzenden Oberfläche, elektrostatisch lackiert und in einem dritten Arbeitsschritt im Vakuum aluminisiert. Dieses Verfahren wird, wegen des zusätzlichen Lackierschrittes, allgemein als zu kompliziert und zu kostenintensiv für die Massenproduktion von Reflektoren betrachtet. Zudem ist als nachteilig bekannt, dass die Zugabe von Füllstoffen die Fliessfähigkeit einer Spritzgussmasse erniedrigt und die Oberflächen der so produzierten Rohlinge aufraut. Als weiterer Nachteil wird das erhebliche Verlängern der Zykluszeiten beim Spritzgiessen mit solchen Zusammensetzungen gegenüber amorphen Polymeren angesehen.

Aus EP 0 696 304 sind Zusammensetzungen bekannt, welche (a) ein erstes Polyamid, hergestellt aus einer aromatischen Dicarbonsäurekomponente (Isophthalsäure bzw. Terephthalsäure) einer aliphatischen Diaminkomponente (Hexamethylendiamin und 2-Methyl-1,5-pentamethylendiamin); (b) ein sich vom ersten Polyamid unterscheidendes, zweites, aliphatisches (Polyamid 66, Polyamid 6 oder Polyamid 46) oder teilaromatisches Polyamid; und (c) einen mineralischen Füllstoff (Kaolin, Talk, Glimmer oder Wollastonit) umfassen. Aus EP 0 696 304 geht hervor, dass entsprechende Zusammensetzungen mit einem hohen Füllanteil an Kaolin oder Glimmer (mindestens 40 %) einen HDT/A-Wert von über 200 °C erreichen können, dass aber nur in den Fällen eine glänzende Oberfläche beobachtet wird, in denen die Zusammensetzung ausserdem noch 10 % Glasfasern umfasst. Die Beigabe solcher Glasfasern beeinträchtigt aber ebenfalls die Fliessfähigkeit der Zusammensetzung beim Spritzgiessen von Formteilen und führt zu einer unebenen Oberfläche sowie zu einem weniger isotropen bzw. stärker anisotropen Schwindungsverhalten.

Unter dem Namen MINLON^{®} (E.I. du Pont de Nemours & Co., Wilmington, USA) ist ein Material zur Herstellung von Strassenbeleuchtungsreflektoren bekannt. Bei dem genannten Produkt handelt es sich um das teilkristalline Nylon 66 (PA 66), welches neben einem Hitzestabilisator auch 36-40 % klassische Mineralstoffe umfasst. Allerdings erscheint dieses Material von der Oberflächengüte her zumindest für Fahrzeugfahrbeleuchtungen nicht geeignet. Als weiterer Nachteil wird auch hier das erhebliche Verlängern der Zykluszeiten beim Spritzgiessen mit solchen Zusammensetzungen gegenüber amorphen Polymeren angesehen.

Aus dem Stand der Technik sind zudem Zusammensetzungen bekannt, die einen fibrillären, anorganischen Füllstoff (vgl. EP 0 863 180) und einen zusätzlichen körnigen anorganischen Füllstoff umfassen (EP 1 312 647 oder EP 0 585 056) oder die nur einen körnigen, anorganischen Füllstoff umfassen (EP 0 913 421). Auch der Einsatz von flammhemmenden Kalzium-Magnesium-Karbonat-Hydrat Zusatzstoffen zum Verbessern der mechanischen und elektrischen Eigenschaften ist bekannt (vgl. US 5,389,712).

Alle bisher genannten Zusammensetzungen eigenen sich entweder aus ökonomischen Gründen, wegen deren Zusatz- oder Füllstoffe, aus ökologischen Gründen oder wegen derer Kristallinität nicht oder nur bedingt für die Verwendung bei der Herstellung von Lichtreflektierbauteilen, die für Betriebstemperaturen von mindestens 200 °C ausgelegt bzw. geeignet sind.

Materialeigenschaftsbedingte Einschränkungen treffen dagegen für die Produkte TROGAMID^{®} CX (PA PACM/12) und TROGAMID^{®} T5000 (PA 6-3-T) von Degussa zu; allerdings verunmöglicht hier ein Tg-Wert von 140 bzw. 153 °C die Verwendung bei der Herstellung von Lichtreflektierbauteilen, die für Betriebstemperaturen von mindestens 200 °C geeignet sind. Zu dieser Kategorie gehören auch die Polyamidzusammensetzungen, welche aus DE 102 24 947 A1 bekannt sind. Wie aus der Tabelle 1 aus dieser DE 102 24 947 A1 hervorgeht, weisen diese Copolyamide lediglich Tg-Werte im Bereich von 145-150 °C auf. Diese Copolyamide eignen sich deshalb nicht für Reflektoren, die Betriebstemperaturen von mindestens 200 °C aushalten müssen.

Aus dem Stand der Technik sind weitere Zusammensetzungen ohne Füllstoffe bekannt. Diese erreichen aber ebenfalls nur ungenügende Tg-Werte von weniger als 175 °C (vgl. z.B. EP 0 313 436, EP 0 553 581 und US 4,898,896). Zu dieser Kategorie von für die geplante Verwendung ungenügenden Polymere gehören auch Polyarylamide wie IXEF^{®} 2057 (Solvay Advanced Polymers), Polyarylate, Polybutylen-Therephthalat (PBT, wie z.B. das ARNITE^{®} TV4 220 von DSM). Die im europäischen Patent EP 0 725 101 B2 des aktuellen Anmelders offenbarten transparenten, farblosen und amorphen Homopolyamide weisen einen Tg-Wert von ca. 157 °C auf und sind allenfalls für die Herstellung von Subreflektoren, aber für die Herstellung von Lichtreflektierbauteilen nicht geeignet, die für Betriebstemperaturen von mindestens 200 °C ausgelegt sind.

Aus dem Patent US 6,355,723 B1 sind spritzgegossene Reflektoren aus amorphen Thermoplasten, wie Polyetherimiden, Polyarylethern, Polyethersulfonen, Polysulfonen, Polycarbonaten, Polyestercarbonaten, Polyarylaten, Polyamiden, Polyestern und Einzelphasengemischen solcher Thermoplaste bekannt. Diese Reflektoren können direkt mit einer Metallschicht versehen werden und eine Glasübergangstemperatur (Tg) von mindestens 170 °C bis 200 °C aufweisen. Um allfällige Oberflächenfehler vor dem Metallisieren der Reflektoroberfläche mittels Sichtinspektion einfacher feststellen zu können und um unerwünschte Lichteffekte durch nicht-metallisierte Teile der Reflektoren zu unterbinden, sind alle diese Reflektoren mittels Beimischen von Farbstoffen schwarz eingefärbt.

Die Aufgabe der vorliegenden Erfindung besteht darin, alternative Materialien vorzuschlagen, welche einen Tg-Wert von über 200 °C aufweisen und mit welchen Lichtreflektierbauteile mit zumindest annähernd gleich guter Oberfläche (die für die direkte Beschichtung mit einer Metallschicht geeignet ist) und mit zumindest annähernd gleich guter Wärmeformbeständigkeit hergestellt werden können, wie mit aus dem Stand der Technik bekannten Materialien.

Diese Aufgabe wird durch die Merkmale des unabhängigen Anspruchs 1 gelöst, indem die Verwendung einer thermoplastischen Polymer-Formmasse zum Herstellen von für Betriebstemperaturen von mindestens 200 °C geeigneten, metallisch beschichteten Lichtreflektierbauteilen auf der Basis von Thermoplasten vorgeschlagen wird. Die erfindungsgemässe Verwendung ist dadurch gekennzeichnet, dass die Formmasse Polyamide umfasst, die ausgewählt sind aus einer Gruppe, welche aus Homopolyamiden, Copolyamiden sowie Mischungen (Blends) aus Homopolyamiden und/oder Copolyamiden besteht, wobei diese Polyamide ausgewählt sind aus einer Gruppe, die amorphe und transparente Polyamide umfasst, und wobei diese Polyamide eine Glasübergangstemperatur (Tg) von mindestens 205 °C aufweisen.

Bevorzugte Ausführungsformen und weitere erfindungsgemässe Merkmale ergeben sich aus den abhängigen Ansprüchen.

"Transparente Polyamide" umfassen im Zusammenhang mit der vorliegenden Erfindung zusätzlich zu den amorphen Polyamiden auch solche Polyamide, die nicht mehr völlig amorph sind, sondern auf Grund ihrer von Auge nicht sichtbaren mikrokristallinen Struktur trotzdem noch durchsichtig sind.

Im Zusammenhang mit der vorliegenden Erfindung werden unter dem Begriff "Polyamid" entsprechend dem unabhängigen Anspruch 1 verstanden:
- Homopolyamide;
- Copolyamide;
- Mischungen (Blends) aus Homopolyamiden und Copolyamiden;
- Mischungen aus Homopolyamiden; und
- Mischungen aus Copolyamiden.

Lichtreflektierbauteile, die erhöhten thermischen Belastungen ausgesetzt sind, wie insbesondere Reflektoren oder gegebenenfalls auch Subreflektoren fallen unter die erfindungemässe Verwendung bzw. unter die erfindungsgemäss hergestellten Ausführungsformen.

Bisher wurde nicht erkannt, dass auch glasklar durchsichtige Polyamide mit einem erhöhten Tg-Wert von bis zu 192 °C (vgl. DE 26 42 244 A1) für die Herstellung von Lichtreflektierbauteilen verwendet werden können, die für Betriebstemperaturen von mindestens 190 °C ausgelegt sind. Auch sind bislang keine entsprechenden Lichtreflektierbauteile aus einem amorphen Polyamid bekannt, die metallisch beschichtet und in Folge ihrer Glasübergangstemperatur (Tg) von mindestens 200 °C für Betriebstemperaturen von mindestens 200 °C geeignet sind.

Die bevorzugten, erfindungsgemäss bei der Herstellung von Lichtreflektierbauteilen verwendeten, amorphen und/oder transparenten Polyamide erlauben dank ihrer Glasübergangstemperatur (Tg) von mindestens 205 °C die kostengünstige (verhältnismässig billiger Rohstoff und kostengünstiges Herstellungsverfahren) und die zeitsparende Herstellung von Lichtreflektierbauteilen, die für Betriebstemperaturen von mindestens 200 °C geeignet bzw. ausgelegt sind. Bevorzugt weisen diese amorphen und/oder transparenten Polyamide eine Glasübergangstemperatur (Tg) von mindestens 210 °C, besonders bevorzugt von mindestens 215 °C und ganz speziell bevorzugt einen solchen Tg-Wert von mindestens 220 °C auf.

Die Wärmeformbeständigkeit (HDT/A-Wert) derart hergestellter Lichtreflektierbauteile kann durch die Zugabe von anorganischen Füllstoffen zu den verwendeten Polyamid-Formmassen noch erhöht werden: Aus dem Stand der Technik (vgl. EP 1 403 306 B1 und EP 1 416 010 A2) sind teilkristalline Polyamide mit einem mineralischen Füllstoff bekannt, welcher eine ultrafeine Körnung mit einer mittleren Partikelgrösse von maximal 100 nm aufweist. Aus jenen Polyamid-Formmassen lassen sich trotz des Füllstoffanteils Rohlinge spritzgiessen, die in dem Bereich, wo die Werkzeugform hochglanzpoliert ist, sich durch eine glatte Oberfläche mit hohem Glanz auszeichnen.

Aus dem europäischen Patent EP 1 403 306 B1 des aktuellen Patentanmelders sind mit einem nanoskaligen Füllstoff (mit ultrafeiner Kreide) gefüllte, teilkristalline Polyamid-Formmassen auf der Basis von teilaromatischen Copolyamiden mit einer erhöhten Irisiertemperatur von 240 °C bekannt. Als Mineral wurden maximal 30 bis 40 Gew.-% ultrafeine Kreide mit einer mittleren Partikelgrösse von maximal 100 nm und bevorzugt von maximal 80 nm verwendet. Speziell bevorzugt wurde ultrafeines, nicht beschichtetes, gefälltes Kalziumkarbonat mit dem Produktnahmen "SOCAL^{®} U1" (Solvay Chemicals S.A.) in Form von würfelförmigen Partikeln mit einer mittleren Grösse von 70 nm verwendet. Rohlinge auf der Basis von teilkristallinen, teilaromatischen Copolyamiden sind auf Grund ihrer hohen Wärmeformbeständigkeit (hoher HDT/A-Wert und hohe Schmelztemperatur) geeignet für den Einsatz als echte Reflektoren im heissen Bereich von Fahrzeugfahrbeleuchtungen, d.h. z.B. als Reflektoren in Automobil-Scheinwerfern oder in Scheinwerfern bzw. Fahrzeugfahrbeleuchtungen anderer Fahrzeuge. Auch für die Produktion von Reflektoren für andere (z.B. stationäre) Lichtanlagen kommen solche Rohlinge in Betracht. Die Irisiertemperatur charakterisiert bekanntlich bei stufenweiser Erhöhung der Temperatur denjenigen Wert, bei dem die Reflektorschicht zu schillern beginnt, was durch einen mechanischen Verzug zwischen dem Polymeruntergrund und der Metallbeschichtung infolge der unterschiedlichen Wärmeausdehnung dieser Werkstoffe hervorgerufen wird. An einem auf der Basis eines PA 6T/6I (70/30) hergestellten Reflektor wurde eine Irisiertemperatur von ca. 240 °C gemessen. Die Polyamid-Formmasse enthielt dabei 30 Gew.-% ultrafeine Kreide mit einer mittleren Partikelgrösse von 70 nm.

Zudem ist aus der europäischen Patentanmeldung EP 1 416 010 A2 ein Verfahren bekannt, gemäss welchem organisch modifizierte Schichtsilikate bis zu einer Endkonzentration dieser Schichtsilikate von maximal 10 Gew.-% (bevorzugt von 2.5 bis 6 Gew.-%) in der Schmelze des Polyamid-Nanocomposites eingestellt werden können. Das dabei produzierte Material ist eine Polyamid-Formmasse mit einem teilkristallinen Polyamid und einem mineralischen Füllstoff, der bevorzugt eine ultrafeine Körnung mit einer mittleren Partikelgrösse von maximal 100 nm aufweist. Als Mineral wurden exfolierte Schichtsilikate verwendet. Gemäss einem bevorzugten Bespiel wurde eine Mischung aus teilkristallinem PA 66 und amorphem PA 6I/6T verwendet, das bei der EMS-Chemie AG (CH-7013 Domat/Ems) unter dem Handelsnahmen GRIVORY^{®} GV erhältlich ist. Zu den vorzugsweise verwendeten Phyllosilikaten (Schichtsilikaten) des Dreischichttyps (2:1) zählen Glimmer (z.B. Muskovit, Paragonit, Phologopit, Biotit, Lepidolith, Margarit), Smektite (Montmorillonit, Hectorit) und Vermiculit. Mit derartigen Polyamid-Nanocomposites konnten unter Verwendung von hochglanzpolierten Werkzeugformen Formteile mit glatter Oberfläche und mit hohem Glanz erzeugt werden. Allerdings eignen sich diese Zusammensetzungen auf Grund ihrer niedrigen Wärmeformbeständigkeit nicht für die Verwendung bei der Herstellung von Lichtreflektierbauteilen, die für Betriebstemperaturen von mindestens 200 °C ausgelegt sind. Zudem verlängern sich die Zykluszeiten beim Spritzgiessen mit diesen Zusammensetzungen deutlich gegenüber den erfindungsgemäss verwendeten, amorphen Polyamiden.

Aus dem europäischen Patent EP 0 725 100 B1 des aktuellen Patentanmelders sind des weiteren farblose, transparente Copolyamide auf der Basis von cycloaliphatischen Diaminen und aromatischen Dicarbonsäuren (z.B. auch das Material, das unter dem Handelsnamen GRILAMID^{®} TR 70 von der EMS-Chemie AG hergestellt und vertrieben wird und einen Tg-Wert von 200 °C aufweist) mit einem erhöhten Tg-Wert von 195 °C bis 230 °C bekannt. Diese Copolyamide eignen sich grundsätzlich auch für die Verwendung bei der Herstellung von Lichtreflektierbauteilen, die für Betriebstemperaturen von mindestens 190 °C oder bevorzugt mindestens 200 °C geeignet sind. Allerdings wurde auch hier der spezielle Verwendungszweck bzw. die spezielle Verwendungsmöglichkeit nicht erkannt.

Als Verfahren zum Herstellen der Polyamid-Formmassen ist die Zumischung des mineralischen Füllstoffs zum Polyamid in einem Doppelschneckenextruder bevorzugt (Compoundierung). An Stelle eines einzigen Polyamidtyps ist (vgl. die oben stehende Definition der Polyamide) auch der Einsatz eines Polyamid-Blends möglich. Zum Erhalt von besonders präzisen Reflektoroberflächen kann beim Spritzgiessen in einer Spezialversion die Gasinnendrucktechnik (siehe z.B. in *PLAST-VERARBEITER,* 5/2002, erschienen im Hüthig Verlag, D-69121 Heidelberg) eingesetzt werden.

Es soll noch angemerkt werden, dass die Polyamid-Formmassen Füllstoffe und auch übliche Additive, wie z.B. Stabilisatoren (Hitze- und UV-Stabilisatoren unterschiedlicher Art), Flammschutzmittel, Verarbeitungshilfsmittel, Antistatikmittel und weitere Zusatzstoffe enthalten können. So enthielten die Polyamid-Formmassen in EP 1 403 306 B1 und EP 1 416 010 A2 jeweils einen Hitzestabilisator.

Die Herstellung von Lichtreflektierbauteilen bzw. Formteilen geschieht bevorzugt durch Spritzgiessen oder Sonderverfahren des Spritzgiessens. Solche Sonderverfahren umfassen unter anderem das Spritzprägen, die Gasinnendrucktechnik und das Mehrkomponentenspritzgiessen. Für die Herstellung von Lichtreflektierbauteilen oder von Teilen derselben eignen sich aber auch alle anderen aus der Kunststofftechnik bekannten, thermoplastischen Formgebungsverfahren (z.B. Thermoformen, Vakuumtiefziehen, etc.). Solche können zum Herstellen von selbsttragenden Formkörpern oder zum Herstellen von Folien und dergleichen angewendet werden.

Speziell bevorzugt für die Verwendung einer thermoplastischen Polymer-Formmasse zum Herstellen von für Betriebstemperaturen von mindestens 200 °C geeigneten, metallisch zu beschichtenden Lichtreflektierbauteilen ist eine Polyamidzusammensetzung, welche Dimethyl-p-diaminocyclohexylmethan (MACM), Isophthalsäure (I) und Laurinlactam umfasst. Diese Co-Polyamidzusammensetzung wird mit PA MACMI/12 bezeichnet. Besonders bevorzugt ist ein PA MACMI/12, welches 15 Gew.-% (entspricht 14.1 Mol-%) Laurinlactam und die anderen beiden Komponenten in nahezu äquimolarer Menge enthält. Diese Zusammensetzung ist bei der EMS-Chemie AG unter dem Namen GRILAMID^{®} TR FE 5596 erhältlich und weist einen Tg-Wert von 215 °C auf.

Wird der Anteil des Laurinlactams im PA MACMI/12 auf 19 Gew.-% (entspricht 18.0 Mol-%) erhöht, so ergibt sich für diese Polyamidzusammensetzung immer noch ein Tg-Wert von 205 °C. Bevorzugt sind PA MACMI/12-Zusammensetzungen mit einem Laurinlactamanteil im Bereich von 5 bis 18 Mol-%, wobei ein Laurinlactamanteil im Bereich von 9 bis 18 Mol-% speziell bevorzugt ist.

Weitere bevorzugte Polyamidzusammensetzungen ergeben sich aus dem bereits zitierten Dokument EP 0 725 100 B1 des aktuellen Anmelders. Tatsächlich entspricht die Offenbarung dieses Dokuments einer Verallgemeinerung der eben genannten, speziell bevorzugten PA MACMI/12 Polyamidzusammensetzungen. Allerdings muss in Übereinstimmung mit der erfindungsgemässen Verwendung immer die Voraussetzung gegeben sein, dass der Tg-Wert der Polyamidzusammensetzung mindestens 205 °C beträgt. Entsprechend bevorzugt für die Verwendung einer thermoplastischen Polymer-Formmasse zum Herstellen von für Betriebstemperaturen von mindestens 200 °C geeigneten, metallisch beschichteten Lichtreflektierbauteilen sind farblose, transparente Copolyamide, oder deren Blends oder Legierungen mit mindestens einem Homopolyamid. Diese Polyamidzusammensetzungen sind dadurch gekennzeichnet, dass die Copolyamide aufgebaut sind aus:
(a) mindestens einem cycloaliphatischen Diamin mit 6 bis 24 C-Atomen, in nahezu äquimolarem Verhältnis mit
(b) Isophthalsäure, die durch 0 bis 50 Mol-% Terephthalsäure und/oder Naphthalindicarbonsäure und/oder 0 bis 20 Mol-% einer aliphatischen Dicarbonsäure ersetzt ist; und
(c) bis zu 20 Mol-% weiterer polyamidbildender Monomere;
wobei die Copolyamide eine Glasübergangstemperatur (Tg) von mindestens 205 °C aufweisen und die Copolyamide oder deren Blends oder Legierungen wahlweise verarbeitungs- oder verwendungsbedingte Zusatzstoffe enthalten.

Bevorzugt werden hierbei solche Copolyamide, die dadurch gekennzeichnet sind, dass die polyamidbildenden Monomere (c) 1 bis 18 Mol-% mindestens eines Lactams oder einer Omega-Aminocarbonsäure oder der nahezu äquimolaren Mischung mindestens eines aliphatischen Diamins und mindestens einer aliphatischen Dicarbonsäure, welche 6 bis 12 C-Atome aufweisen, sind. Bevorzugt werden zudem solche Copolyamide, die dadurch gekennzeichnet sind, dass das Diamin 15 bis 21 C Atome und mindestens einen Cyclohexanring aufweist. Dabei ist speziell bevorzugt, dass das substituierte cycloaliphatische Diamin ein Bis-(3-methyl-4-aminocyclohexyl)-methan ist. Auch das nichtsubstituierte p-Diaminodicyclohexylmethan (PACM) kann zumindest anteilmässig verwendet werden. Ausserdem werden solche Copolyamide bevorzugt, die dadurch gekennzeichnet sind, dass das Lactam ein Decanolactam oder ein Dodecanolactam ist.

Eine alternative, bevorzugte Polyamidzusammensetzung umfasst das cycloaliphatische Diamin 3,3'-Dimethyl-4,4'-diaminodicyclohexylether und ist ebenfalls für die erfindungsgemässe Verwendung geeignet.

Ebenfalls bevorzugt für die Verwendung einer thermoplastischen Polymer-Formmasse zum Herstellen von für Betriebstemperaturen von mindestens 200 °C geeigneten, metallisch zu beschichtenden Lichtreflektierbauteilen ist eine Polyamidzusammensetzung, welche auf einer PA MACMI/MACM12/PACMI/PACM12-Zusammensetzung beruht. Diese Co-Polyamidzusammensetzung umfasst also die beiden cycloaliphatischen Diamin-Monomeren MACM (Dimethyl-p-diaminocyclohexylmethan) und PACM (Diaminodicyclohexylmethan), sowie die beiden Dicarbonsäure-Monomeren Isophthalsäure (I) und Dodecandisäure. Die Summe der Mengen der beiden Diamine in der Polyamidzusammensetzung ist reaktionsgemäss annähernd äquimolar zu der Summe der Mengen der beiden Dicarbonsäuren (je 100 Mol-%).

Besonders bevorzugt ist ein PA MACMI/MACM12/PACMI/PACM12, welches 46 Mol-% MACM und 54 Mol-% PACM einerseits sowie 76 Mol-% Isophthalsäure und 24 Mol-% Dodecandisäure andrerseits enthält. Bei dieser prozentualen Zusammensetzung wurde ein Tg-Wert von 221 °C gemessen, und aus dieser Zusammensetzung hergestellte Lichtreflektierbauteile zeigten bei einer Dauerbelastung von 205 °C während 4 Stunden im wesentlichen dieselbe gute Formstabilität und keine Blasenbildung so wie ein gleiches, aus ULTRASON E ^{®} hergestelltes Bauteil. Die Belastbarkeit des erfindungsgemässen Bauteils war bei diesem Vergleich sogar um 10 °C höher.

Anwendungen der erfindungsgemässen Verwendung umfassen das Herstellen von entsprechenden Lichtreflektierbauteilen aus einer thermoplastischen Polymer-Formmasse, die metallisch beschichtet und für Betriebstemperaturen von mindestens 200 °C geeignet sind. Dabei kann optional zwischen dem Polyamidbauteil und der metallischen Beschichtung eine Primerschicht zum Erzeugen von speziellen optischen Effekten angeordnet sein. Besonders bevorzugt sind Lichtreflektierbauteile, bei welchen die Metallschicht durch Vapor-Deposit-Verfahren aufgebracht ist.

Anwendungen der erfindungsgemässen Verwendung umfassen das Herstellen von Lichtreflektierbauteilen, die Reflektoren für die Beleuchtung, insbesondere für die Fahrbeleuchtung, von Fahrzeugen aller Art zu Lande, zu Wasser und in der Luft sind. Speziell bevorzugt ist die erfindungsgemässe Verwendung für das Herstellen von Lichtreflektierbauteilen in Fahrzeugfahrbeleuchtungen, wie Scheinwerfern, Abblendlichtern, Tagfahrlicht bzw. Tageslichtfahrbeleuchtung oder Nebelscheinwerfern von Motorfahrzeugen, Schiffen, Luftkissenfahrzeugen und Flugzeugen.
Weitere Anwendungen der erfindungsgemässen Verwendung umfassen das Herstellen von Lichtreflektierbauteilen, die Reflektoren für Signaleinrichtungen sind, welche ausgewählt sind aus einer Gruppe, die Verkehrssignale für Fahrzeuge aller Art zu Lande, zu Wasser und in der Luft sind. Speziell bevorzugt ist die erfindungsgemässe Verwendung für das Herstellen von Lichtreflektierbauteilen in Signaleinrichtungen, wie in Warnblinkern, insbesondere in Warnblinkern in ortsfesten Strassensignalen oder im temporären Einsatz z.B. an Baustellen; Positionslichtern, insbesondere Positionslichter an Fahrzeugen aller Art, Positionslichter von Hafeneinfahrten und Anflugsignale auf Flugplätzen; sowie in Befeuerungen von Leuchttürmen und in Beleuchtungen von Strassensignalen und Werbesignalen aller Art.

Weitere Anwendungen der erfindungsgemässen Verwendung umfassen das Herstellen von Lichtreflektierbauteilen, die Reflektoren für Beleuchtungseinrichtungen sind, welche ausgewählt sind aus einer Gruppe, die Strassenbeleuchtungen, Flutlichtanlagen und medizinische Operationsbeleuchtungen umfasst. Spezielle Reflektoren, wie z.B. Spiegel an medizinischen Operationsbeleuchtungen weisen bekannterweise Reflexionsschichten auf, die nur einen Teil des Lichtes (vor allem im kühlen, Infrarot-fernen Bereich) reflektieren.

Weitere Anwendungen der erfindungsgemässen Verwendung umfassen das Herstellen Lichtreflektierbauteilen, die Reflektoren für Sonnenlichtkollektoren sind, welche ausgewählt sind aus einer Gruppe, die Flachkollektoren, Parabolspiegel, Rinnenspiegel und Mischformen derselben umfasst.

Entsprechend der jeweiligen Anwendung der entsprechend der erfindungsgemässen Verwendung hergestellten Lichtreflektierbauteile kann die Betriebsdauer bis zu vielen Stunden betragen. So sind z.B. Reflektoren in der Tageslichtfahrbeleuchtung von Lastkraftwagen oftmals mehrere Stunden ununterbrochen unter Betriebsbelastung. Blinkanlagen, die Baustellen absichern sollen, sind oft über mehrere Tage im Einsatz und dementsprechend hohen Temperaturen ausgesetzt, obwohl die einzelne Brenndauer des Blinklichtes nur sehr kurz (im Bereich von Sekunden oder Sekundenbruchteilen) ist.

## Patentansprüche

1. Verwendung einer thermoplastischen Polymer-Formmasse zum Herstellen von für Betriebstemperaturen von mindestens 200 °C geeigneten, metallisch beschichteten Lichtreflektierbauteilen auf der Basis von Thermoplasten, **dadurch gekennzeichnet, dass** die Formmasse Polyamide umfasst, die ausgewählt sind aus einer Gruppe, welche aus Homopolyamiden, Copolyamiden sowie Mischungen (Blends) aus Homopolyamiden und Copolyamiden und Mischungen aus Homopolyamiden oder Copolyamiden besteht, wobei diese Polyamide ausgewählt sind aus einer Gruppe, die amorphe und transparente Polyamide umfasst, und wobei diese Polyamide eine Glasübergangstemperatur (Tg) von mindestens 205 °C aufweisen.

2. Verwendung nach Anspruch 1, **dadurch gekennzeichnet, dass** die verwendeten Polyamide eine Glasübergangstemperatur (Tg) von mindestens 210 °C, bevorzugt von mindestens 215 °C und speziell bevorzugt von mindestens 220 °C aufweisen.

3. Verwendung nach Anspruch 1 oder 2, **dadurch gekennzeichnet, dass** die verwendete Polyamid-Formmasse einen ultrafeinen, nanoskaligen mineralischen Füllstoff mit einer mittleren Partikelgrösse von maximal 100 nm, bevorzugt von maximal 80 nm und speziell bevorzugt von 70 nm, umfasst.

4. Verwendung nach Anspruch 3, **dadurch gekennzeichnet, dass** der ultrafeine, nanoskalige mineralischen Füllstoff ultrafeine Kreide (CaCO₃) ist, wobei die verwendete Polyamid-Formmasse maximal 40 Gew.-%, bevorzugt 20 bis 35 Gew.-%, an ultrafeiner Kreide aufweist.

5. Verwendung nach Anspruch 1 oder 2, **dadurch gekennzeichnet, dass** die verwendete Polyamid-Formmasse einen mineralischen Füllstoff in Form von organisch modifizierten Phyllosilikaten mit einer mittleren Partikelgrösse von maximal 100 nm umfasst.

6. Verwendung nach Anspruch 5, **dadurch gekennzeichnet, dass** die verwendete Polyamid-Formmasse maximal 15 Gew.-%, bevorzugt 2.5 bis 10 Gew.-%, der modifizierten Phyllosilikate aufweist.

7. Verwendung nach einem der vorhergehenden Ansprüche, **dadurch gekennzeichnet, dass** zum Herstellen von für Betriebstemperaturen von mindestens 200 °C geeigneten, metallisch zu beschichtenden Lichtreflektierbauteilen die Spritzgusstechnik oder Sonderverfahren der Spritzgusstechnik angewendet werden.

8. Verwendung nach einem der vorhergehenden Ansprüche, **dadurch gekennzeichnet, dass** zum Herstellen von für Betriebstemperaturen von mindestens 200 °C geeigneten, metallisch zu beschichtenden Lichtreflektierbauteilen farblose, transparente Copolyamide, oder deren Blends oder Legierungen mit mindestens einem Homopolyamid verwendet werden, wobei diese Copolyamide aufgebaut sind aus:
(a) mindestens einem cycloaliphatischen Diamin mit 6 bis 24 C-Atomen, in nahezu äquimolarem Verhältnis mit
(b) Isophthalsäure, die durch 0 bis 50 Mol-% Terephthalsäure und/oder Naphthalindicarbonsäure und/oder 0 bis 20 Mol-% einer aliphatischen Dicarbonsäure ersetzt ist; und
(c) bis zu 20 Mol-% weiterer polyamidbildender Monomere;
und wobei die Copolyamide oder deren Blends oder Legierungen wahlweise verarbeitungs- oder verwendungsbedingte Zusatzstoffe enthalten.

9. Verwendung nach einem der vorhergehenden Ansprüche, **dadurch gekennzeichnet, dass** als Polyamid eine PA MACMI/12-Zusammensetzung verwendet wird, welche Dimethyl-p-diaminocyclohexylmethan (MACM), Isophthalsäure (I) und Laurinlactam umfasst.

10. Verwendung nach Anspruch 9, **dadurch gekennzeichnet, dass** die PA MACMI/12-Zusammensetzung Laurinlactam im Bereich von 5 bis 18 Mol-%, speziell bevorzugt von 9 bis 18 Mol-%, und die anderen beiden Komponenten in nahezu äquimolarer Menge enthält.

11. Verwendung nach Anspruch 10, **dadurch gekennzeichnet, dass** die PA MACMI/12-Zusammensetzung 15 Gew.-% (entspricht 14.1 Mol-%) Laurinlactam und die anderen beiden Komponenten in nahezu äquimolarer Menge enthält.

12. Verwendung nach Anspruch 8, **dadurch gekennzeichnet, dass** als Polyamid eine PA MACMI/MACM12/PACMI/PACM12-Zusammensetzung verwendet wird.

13. Lichtreflektierbauteil, hergestellt aus einer Polymer-Formmasse auf der Basis von Thermoplasten, der metallisch beschichtet und für Betriebstemperaturen von mindestens 200 °C geeignet ist, **dadurch gekennzeichnet, dass** die Formmasse zum Herstellen dieses Lichtreflektierbauteils Polyamide umfasst, die ausgewählt sind aus einer Gruppe, welche aus Homopolyamiden, Copolyamiden sowie Mischungen (Blends) aus Homopolyamiden und Copolyamiden und Mischungen aus Homopolyamiden oder Copolyamiden besteht, wobei diese Polyamide ausgewählt sind aus einer Gruppe, die amorphe und transparente Polyamide umfasst, und wobei diese Polyamide eine Glasübergangstemperatur (Tg) von mindestens 205 °C aufweisen.

14. Lichtreflektierbauteil nach Anspruch 13, **dadurch gekennzeichnet, dass** der Polyamidbauteil direkt metallisiert ist.

15. Lichtreflektierbauteil nach Anspruch 13, **dadurch gekennzeichnet, dass** zwischen dem Polyamidbauteil und der metallischen Beschichtung eine Primerschicht angeordnet ist.

16. Lichtreflektierbauteil nach einem der Ansprüche 13 bis 15, **dadurch gekennzeichnet, dass** die Metallschicht durch ein Vapor-Deposit-Verfahren aufgebracht ist.

17. Lichtreflektierbauteil nach einem der Ansprüche 13 bis 16, **dadurch gekennzeichnet, dass** die zur Herstellung verwendeten Polyamide eine Glasübergangstemperatur (Tg) von mindestens 210 °C, bevorzugt von mindestens 215 °C und speziell bevorzugt von mindestens 220 °C aufweisen.

18. Lichtreflektierbauteil nach einem der Ansprüche 13 bis 17, **dadurch gekennzeichnet, dass** die verwendete Polyamid-Formmasse einen ultrafeinen, nanoskaligen mineralischen Füllstoff mit einer mittleren Partikelgrösse von maximal 100 nm, bevorzugt von maximal 80 nm und speziell bevorzugt von 70 nm, umfasst.

19. Lichtreflektierbauteil nach Anspruch 18, **dadurch gekennzeichnet, dass** der ultrafeine, nanoskalige mineralischen Füllstoff ultrafeine Kreide (CaCO₃) ist, wobei die verwendete Polyamid-Formmasse maximal 40 Gew.-%, bevorzugt 20 bis 35 Gew.-%, an ultrafeiner Kreide aufweist.

20. Lichtreflektierbauteil nach einem der Ansprüche 13 bis 17, **dadurch gekennzeichnet, dass** die verwendete Polyamid-Formmasse einen mineralischen Füllstoff in Form von organisch modifizierten Phyllosilikaten mit einer mittleren Partikelgrösse von maximal 100 nm umfasst.

21. Lichtreflektierbauteil nach Anspruch 20, **dadurch gekennzeichnet, dass** die verwendete Polyamid-Formmasse maximal 15 Gew.-%, bevorzugt 2.5 bis 10 Gew.-%, der modifizierten Phyllosilikate aufweist.

22. Lichtreflektierbauteil nach einem der Ansprüche 13 bis 21, **dadurch gekennzeichnet, dass** es mittels der Spritzgusstechnik oder Sonderverfahren der Spritzgusstechnik hergestellt ist.

23. Lichtreflektierbauteil nach einem der Ansprüche 13 bis 22, **dadurch gekennzeichnet, dass** es aus einem farblosen, transparenten Copolyamid, oder deren Blends oder Legierungen mit mindestens einem Homopolyamid hergestellt ist, wobei diese Copolyamide aufgebaut sind aus:
(a) mindestens einem cycloaliphatischen Diamin mit 6 bis 24 C-Atomen, in nahezu äquimolarem Verhältnis mit
(b) Isophthalsäure, die durch 0 bis 50 Mol-% Terephthalsäure und/oder Naphthalindicarbonsäure und/oder 0 bis 20 Mol-% einer aliphatischen Dicarbonsäure ersetzt ist; und
(c) bis zu 20 Mol-% weiterer polyamidbildender Monomere;
und wobei die Copolyamide oder deren Blends oder Legierungen wahlweise verarbeitungs- oder verwendungsbedingte Zusatzstoffe enthalten.

24. Lichtreflektierbauteil nach einem der Ansprüche 13 bis 23, **dadurch gekennzeichnet, dass** es aus einer PA MACMI/12-Zusammensetzung hergestellt ist, welche Dimethyl-p-diaminocyclohexylmethan (MACM), Isophthalsäure (I) und Laurinlactam umfasst.

25. Lichtreflektierbauteil nach Anspruch 24, **dadurch gekennzeichnet, dass** die PA MACMI/12-Zusammensetzung Laurinlactam im Bereich von 5 bis 18 Mol-%, speziell bevorzugt von 9 bis 18 Mol-%, und die anderen beiden Komponenten in nahezu äquimolarer Menge enthält.

26. Lichtreflektierbauteil nach Anspruch 25, **dadurch gekennzeichnet, dass** die PA MACMI/12-Zusammensetzung 15 Gew.-% (entspricht 14.1 Mol-%) Laurinlactam und die anderen beiden Komponenten in nahezu äquimolarer Menge enthält.

27. Lichtreflektierbauteil nach Anspruch 23, **dadurch gekennzeichnet, dass** es aus einer PA MACMI/MACM12/PACMI/PACM12-Zusammensetzung hergestellt ist.

28. Lichtreflektierbauteil nach einem der Ansprüche 13 bis 27, **dadurch gekennzeichnet, dass** es ein Reflektor für eine Fahrbeleuchtung von Fahrzeugen ist, die ausgewählt sind aus einer Gruppe, welche Motorfahrzeuge, Schiffe und Flugzeuge umfasst.

29. Lichtreflektierbauteil nach einem der Ansprüche 13 bis 27, **dadurch gekennzeichnet, dass** es ein Reflektor für eine Signaleinrichtungen ist, die ausgewählt sind aus einer Gruppe, welche Verkehrssignale, Positionslichter sowie Beleuchtungen von Strassen- und Werbesignalen umfasst.

30. Lichtreflektierbauteil nach einem der Ansprüche 13 bis 27, **dadurch gekennzeichnet, dass** es ein Reflektor für eine Beleuchtungseinrichtung ist, die ausgewählt ist aus einer Gruppe, welche Strassenbeleuchtungen, Flutlichtanlagen und medizinische Operationsbeleuchtungen umfasst.

31. Lichtreflektierbauteil nach einem der Ansprüche 13 bis 27, **dadurch gekennzeichnet, dass** es ein Reflektor für einen Sonnenlichtkollektor ist, der ausgewählt ist aus einer Gruppe, die einen Flachkollektor, einen Parabolspiegel, einen Rinnenspiegel und Mischformen derselben umfasst.
